# EUROPEAN PATENT APPLICATION

(11) **EP 3 672 025 A1**
(43) Date of publication of application: **24.06.2020**
(21) Application number: 18213044.3
(22) Date of filing: 17.12.2018
(51) Int. Cl.: H02K 1/18, H02K 7/18

(54) **ELECTRIC MACHINE AND WIND TURBINE**

(71) Applicant: Siemens Gamesa Renewable Energy A/S, 7330 Brande (DK)
(72) Inventor: Andersen, Mads Peter Zippor Leth, 8670 Låsby (DK); Valbjoern, Jesper, 6000 Kolding (DK)
(74) Representative: Aspacher, Karl-Georg

(57) **Abstract**

Electric machine, especially generator for a wind turbine (1), comprising a stator (3) that is attached to a stator support structure (6) by multiple connection means (7) arranged at the outer or inner circumference of the stator (3), characterized in that at least one of the connection means (7) is formed by a first and second clamping jaw (9, 10) and clamping means (11) that exert a force on the first and second clamping jaw (9, 10), pushing the first clamping jaw (9) against a first clamping face (12) of a protrusion (13) of the stator (3) and a first clamping face (14) of a protrusion (15) of the support structure (6) and pushing the second clamping jaw (10) against a second clamping face (16) of the protrusion (13) of the stator (3) and a second clamping face (17) of the protrusion (15) of the support structure (6), wherein the clamping jaws (9, 10) are arranged on opposite sides of the respective protrusion (13, 15).

## Description

The present invention relates to an electric machine, especially a generator for a wind turbine, comprising a stator that is attached to a stator support structure by multiple connection means arranged at the outer or inner circumference of the stator. Additionally, the present invention relates to a wind turbine.

The windings of the stator of an electric machine are typically carried by a stator body, that is formed by a lamination of isolated metal sheets to reduce eddy currents. For large electric machines, e.g. for generators of wind turbines, a robust support of this stator is required. One method of attaching the stator to a stator support structure is to weld the stator lamination to the support structure. Since the lamination sheets in electric machines are covered with a thin oxidation layer to provide electrical isolation, a non-ideal welding process results that is hard to control. A high risk of impurities in the welding zone results and this can lead to mechanical defects.

Another known approach for connecting the stator to a stator support structure is the use of a sliding dovetail connection. This approach is e.g. disclosed in the thesis by H. Skoog, "Concept for a modular assembly direct drive permanent magnet generator; Development of model and winding scheme", Uppsala Universitet 2010, ISSN: 1650-8300, UPTEC ES 10 003.

One drawback of the dovetail connection is its inability to compensate angular tolerances between the stator lamination and the used locking profile. This can result in a bending of clamping bolts used to attach the locking profile to the support structure which can in turn lead to the failure of these bolts. In the described attachment scheme these bolts are typically hard to access, requiring at least a partial disassembly of the stator support structure to replace damaged bolts.

The object of the present invention is therefore to provide an alternate approach of attaching a stator to a stator support structure that can especially reduce stress and strain on the connecting components and/or facilitate servicing of the machine.

This problem is solved by the previously discussed electric machine, wherein at least one of the connection means is formed by a first and second clamping jaw and clamping means that exert a force on the first and second clamping jaw, pushing the first clamping jaw against a first clamping face of a protrusion of the stator and a first clamping face of a protrusion of the support structure and pushing the second clamping jaw against a second clamping face of the protrusion of the stator and a second clamping face of the protrusion of the support structure, wherein the clamping jaws are arranged on opposite sides of the respective protrusion.

In the electric machine according to the present invention the stator can be connected to the support structure without any welding. Due to the used connection geometry stress and strain on the means used in the connection, especially, e.g. a bolt that can be used as clamping means, can be reduced compared to a dovetail structure if angular tolerances are present. As discussed in more detail below the attachment by using clamping jaws and a clamping means can also allow for an easier replacement of the components used to attach the stator to the support structure and therefore for easier servicing of the electric machine.

In many electric machines the rotor is arranged within the stator. In this case the connection means can be provided on the outer surface of the stator. On the other hand, if the rotor is arranged outside the stator, the connection means can be arranged on the inner surface of the stator. The protrusions of the stator can be preferably formed by the stator lamination. A stator has an approximately cylindrical shape. Therefore, directions are discussed in cylindrical coordinates with respect to the stator.

The first and second clamping jaw can form a respective tapered groove, wherein the respective protrusion of the stator and the support structure engage the tapered groove of the first and second clamping jaw. In other words, both protrusions, especially the respective part forming the respective clamping face, extend into the grooves of both clamping jaws. This allows for an exertion of a force in a direction at an angle, especially orthogonal, to the direction of the exerted clamping force. Especially the clamping force can be applied in the circumferential direction and/or the axial direction and due to the engagement of the protrusions of the stator and the support structure with the groove a force component in the radial direction can result, pressing these components against each other. The clamping means can therefore be attached and removed from a circumferential or an axial side of the stator support structure, therefore allowing for easier access to these components compared to an access from a radial position. This can allow for easier servicing of the components.

The tapered groove can comprise a first surface section that contacts one of the clamping faces of the protrusion of the stator and a second surface section that is arranged at an acute angle to the first surface section and that contacts one of the clamping faces of the protrusion of the support structure. Therefore forcing the clamping jaw against the protrusions by the clamping means will result in a force on the protrusion of the stator and the protrusion of the support structure in opposite radial directions, therefore preferably pushing these components against each other in the radial direction.

In a preferred embodiment the tapered groove can have a trapezoidal shape. The two sides that are at an acute angle to each other can be used to push the protrusion of the stator against the protrusion of the support structure in radial direction as discussed above. An intermediate section that can be at an obtuse angle to both these sections can e.g. be used to attach the clamping means, e.g. to feed a bolt used for clamping through the clamping jaw.

The protrusion of the stator can comprise a first contact face and the protrusion of the support structure can comprise a second contact face, wherein the first contact face contacts the second contact face. The first and second contact face can especially be parallel. The first and second contact face can be orthogonal to the radial direction. The contact faces can be flat surfaces and/or be curved, e.g. have the shape of a segment of a circle.

The clamping faces of the protrusion of the stator can be arranged at an acute angle to the first contact face and/or the clamping faces of the protrusion of the support structure can be arranged at an acute angle to the second contact face. Additionally or alternatively, the normal direction of the respective clamping face can be at an angle to the direction of the clamping force exerted on that face. The previously discussed features allow for a clamping force that is provided at an angle to the normal direction of the contact face to generate a force in the normal direction of the contact face. E.g. the clamping force can be applied in the circumferential and/or axial direction of the stator and the radial force that pushes the protrusion of the stator against the protrusion of the stator support structure can result.

The angle between the clamping faces of the respective protrusion and the contact face can be constant. In this case both the contact face and the clamping face are flat. It is also possible, that the angle between the clamping face and the contact face of the respective protrusion varies, resulting in a curved contact face and/or clamping face.

The clamping means can comprise a shaft, especially a screw, connecting the first clamping jaw to the second clamping jaw. The clamping force can e.g. be generated by feeding a screw through the clamping jaws and tightening the screw. As discussed in more detail below the clamping jaws can extend along the protrusions in the axial direction of the stator. In this case multiple shafts, especially screws, spaced apart in the axial direction can be used to provide the clamping force.

The shaft can extend through a through hole of the protrusion of the support structure. It can preferably extend through the clamping face of this protrusion or through an intermediate surface section between the clamping face and the contact face. This allows for a compact connection means and relatively easy access to the connection means.

When a trapezoidal groove is used, the two lateral sides of the trapezoid can contact the clamping faces of the protrusions to force the contact faces towards each other while the shaft can be fed through the intermediate side of the trapezoid. This allows for an easy and robust attachment.

The clamping jaws can be formed as bars extending along the axial direction of the stator. They can essentially extend along the full length of the stator in the axial direction, e.g. along at least 80% of the length of the stator. It is however also possible, to form the clamping jaws as multiple shorter segments or bars extending along shorter segments of the axial direction of the stator. The protrusion of the stator and/or of the stator support structure can essentially extend along the full length of the stator in the axial direction.

The clamping jaws can be arranged on opposite sides of the respective protrusion in circumferential direction of the stator. This allows for an easy access to the clamping jaws, especially when segmented clamping jaws are used as described above. It also allows for an easy exchange of clamping means, e.g. of screws or bolts fed through the jaws.

Besides the previously discussed electric machine that uses clamping means to attach the stator to the stator support structure the invention also concerns an electric machine, especially a generator for a wind turbine, comprising a stator that is attached to a stator support structure by multiple connection means arranged at the outer or inner circumference of the stator, characterized in that at least one of the connection means is formed by an axial slot, a rod arranged in the slot and a connecting element connecting the rod to the support structure, wherein the width of the rod in the circumferential direction of the stator is wider than the opening of the slot, wherein a face of the rod facing the support structure and/or a section of the slot wall facing away from the support structure is curved, especially in the shape of a segment of a circle.

It is therefore suggested to use a similar approach as the initially discussed dovetail connection between a stator and a stator support structure. The rod can be axially inserted into the axial slot. Since the rod is wider than the opening of the slot the rod can not be pulled out of the slot in the radial direction. By attaching the rod to the stator support structure and exerting a force in the radial direction on the rod, e.g. by inserting screws into the rod that are attached to the stator support structure, a sliding of the rod with respect to the stator in the axial direction is blocked by friction and the stator is therefore fixed in position with respect to the stator support structure. Since the face of the rod facing the support structure and/or the section of the slot wall facing away from the support structure is curved, especially in the shape of a segment of a circle, the rod can however rotate with respect to the stator as long as the radial force on the rod is still relatively small and the friction is therefore not limiting its rotation. Therefore, angular tolerances between the lamination of the stator and the rod or the support structure can be compensated by a slight rotation of the rod and the stress on connecting elements, e.g. screws or bolts, used to fix the rod to the stator support structure can be reduced. A bending of such connection elements and therefore a weakening of the connection elements can therefore be avoided and the time between failures of connection elements can therefore be increased.

In some embodiments the thickness of the stator laminate in the radial direction can be relatively small. It can therefore be advantageous to provide protrusion of the stator in the radial direction and to provide the axial slots in these protrusions.

The support structure and the rod can comprise multiple holes spaced along the axial direction of the stator, wherein a shaft, especially a screw, is engaging these holes to attach the rod to the support structure. As previously discussed, the stress and strain on these shafts can be reduced by using the described shape of the rod and/or the slot wall.

The hole in the support structure can be a through hole which allows e.g. a screw to be attached from the side of the support structure that is facing away from the stator. The holes in the rod can be through holes or blind holes, that can especially be threaded to allow a screw to be fixed to the rod.

The rod can be spaced apart from the bottom of the slot. In conjunction with the curved shape of the face of the rod facing the support structure and/or of the side wall of the slot facing away from the support structure this allows for a certain amount of rotation of the rod and therefore for the previously discussed reduction of the stress or strain on a connecting element connecting the rod to the support structure.

In addition to the discussed electric machines the invention concerns a wind turbine that comprises one of the previously discussed electric machines.

The above and other aspects, features and other advantages of the present invention will be more clearly understood from the following detailed description taken in conjunction with the accompanying drawings, which show schematically:
- Fig. 1: an embodiment of a wind turbine according to the present invention comprising an electric machine according to the present invention,
- Fig. 2: the attachment of a stator to a stator support structure by multiple connection means in an embodiment of the electric machine according to the present invention, and
- Fig. 3 and 4: detailed views of these connection means in two embodiments of an electric machine according to the present invention.

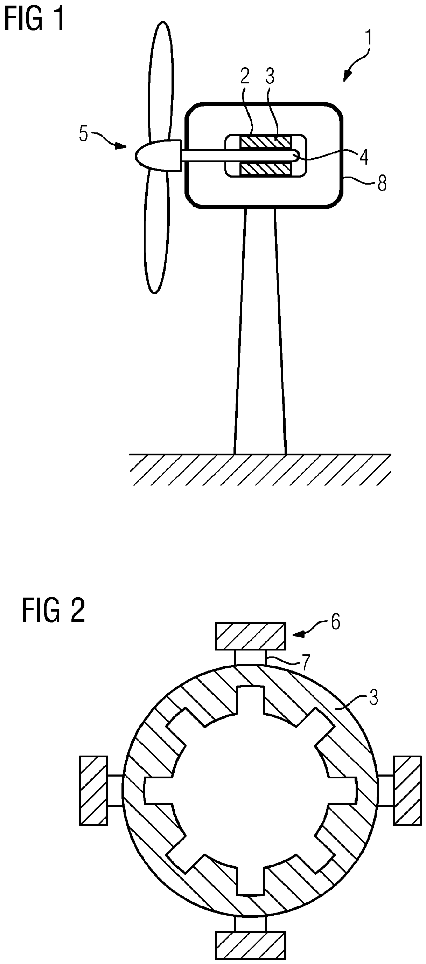

Fig. 1 shows a wind turbine 1 comprising an electric machine 2 driven by the hub 5 of the wind turbine 1. The electric machine 2 comprises a stator 3 and a rotor 4 driven by the hub 5. Since the stator 3 is relatively heavy and large torques can be exerted on the stator, a robust attachment to a support structure, e.g. the nacelle 8 of the wind turbine 1, is necessary.

Fig. 2 schematically shows the attachment of the stator 3 to the support structure 6. For the sake of simplicity and clarity only the laminate of the stator 3 and four individual axial bars of a support structure 6 are shown. To attach the stator 3 to the support structure 6 multiple connection means 7 are arranged at outer circumference of a stator 3. For the sake of simplicity and clarity only four of the connection means 7 are shown. It can be advantageous to use a relatively large number of these connection means 7, e.g. more than 10, 20 or 30 connection means, to establish a robust connection between the stator 3 and the support structure 6.

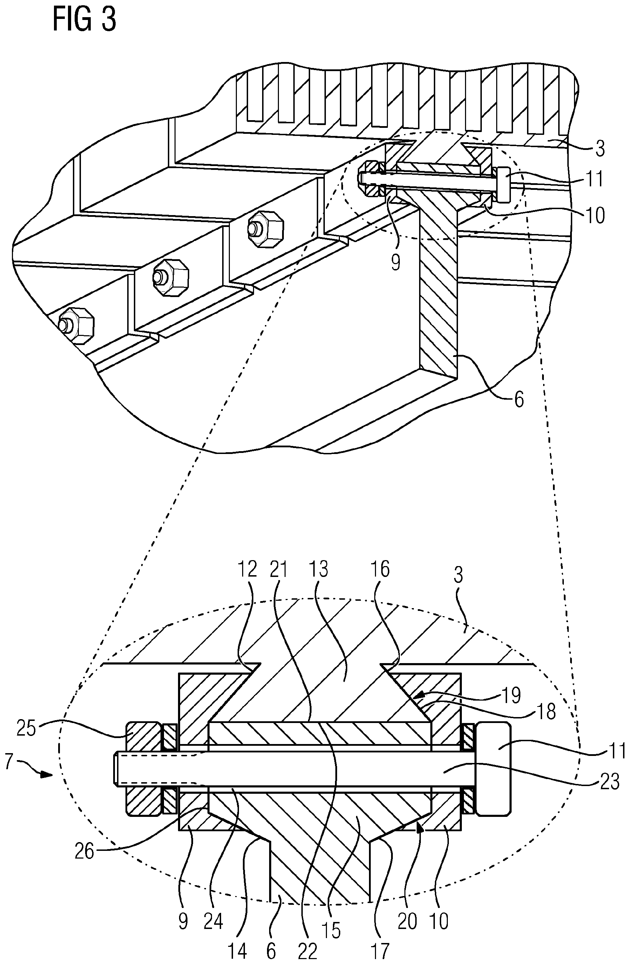

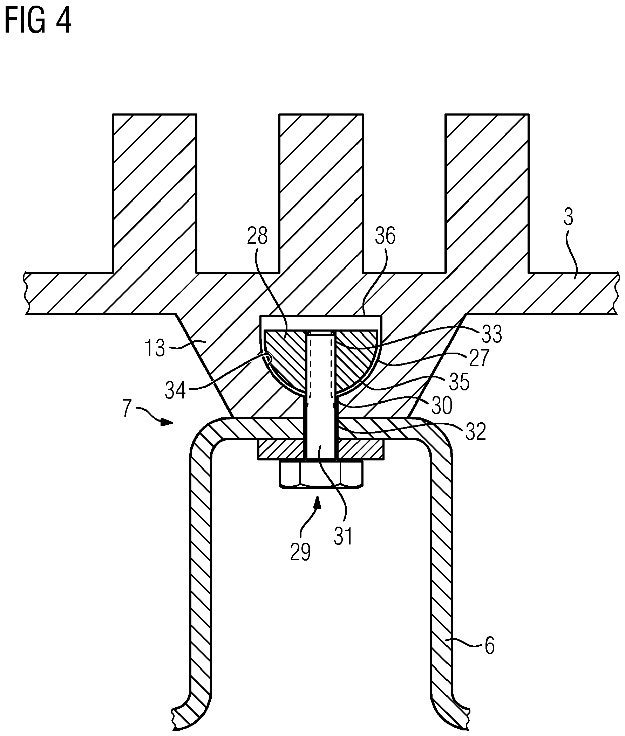

The simpliest way to connect the stator 3 to the support structure 6 would be by welding. Since the stator laminate is typically covered by an oxidation layer to provide isolation such a welding process is however hard to control. With respect to fig. 3 and 4 two alternatives approaches to implement the connection means 7 are therefore discussed.

In the connection means 7 shown in fig. 3 the connection means 7 is formed by a first and second clamping jaw 9, 10 and clamping means 11 that exert a force on the first and second clamping jaw 9, 10. This force pushes the first clamping jaw 9 against the first clamping face 12 of a protrusion 13 of the stator 3 and against the first clamping face 14 of a protrusion 15 of the support structure 6. The second clamping jaw 10 is pushed against a second clamping face 16 of the protrusion 13 of the stator 3 and a second clamping face 17 of the protrusion 15 of the support structure 6. The clamping jaws 9, 10 are arranged on opposite sides of the protrusions 13, 15 in the circumferential direction of the stator 3.

The first and second clamping jaw 9, 10 each form a respective tapered groove 18, wherein the respective protrusions 13, 15 of the stator 3 and the support structure 6 engage the respective tapered groove 18 of the first and second clamping jaw 9, 10. The tapered groove 18 comprises two surface sections 19, 20, that are at an acute angle to each other and that connect to the clamping faces 16, 17 of the protrusions 13, 15. Therefore the clamping force on the clamping jaws 9, 10 in the circumferential direction of the stator 3 leads to a force on the protrusion 13, 15 in opposite radial directions therefore forcing contact faces 21, 22 of these protrusions 13, 15 against each other, therefore robustly attaching the stator 3 to the support structure 6.

The tapered groove 18 has a trapezoidal shape. While the two sides 19, 20 are used to exert a radial force on the protrusions 13, 15, the remaining side is used to feed a shaft 23, especially the shaft 23 of a screw, through the clamping jaws 9, 10. The shaft 23 is fed through a through hole 24 of the stator support structure 6, that passes through an intermediate face 26 of the protrusion 15 that is arranged between the clamping face 14 and the contact face 22. By tightening the nut 25 the clamping jaws 9, 10 can be forced against each other. In this case the angled surface sections 19, 20 push against the angled contact faces 12, 14, 16, 17, forcing the protrusions 13, 15 against each other in the radial direction and therefore leading to a robust connection of the stator 3 to the stator support structure 6.

As seen in fig. 3 multiple bar shaped clamping jaws 9, 10 extend along the axial direction of the stator 3. In the shown example multiple segments are used on each side of the protrusions 13, 15. This can be advantageous, since individual clamping jaws 9, 10 or clamping means 11 can easily be swapped in this case.

Fig. 4 shows connections means 7 that can be used in an alternate embodiment of the electric machine 2 to connect the stator 3 to the support structure 6. Fig. 4 shows one of these connection means 7, wherein multiple connections means 7 are arranged around the stator 3. The connections means 7 is formed by providing an axial slot 27 in the stator 3, especially in a respective protrusion 13 of the stator 3. A rod 28 is axially inserted into the slot. Since the rod 28 is wider than the opening 30 of the slot 27, the rod 28 can not be pulled from the slot 27 in the radial direction. A connecting element 29, in this example a screw, is used to radially pull the rod 28 towards the support structure 6 and therefore fix the stator 3 to the support structure 6. A shaft 31 of the screw is fed through a through hole 32 in the support structure 6 and a threaded through hole 33 in the rod 28. By tightening the screw the rod 28 can be pulled towards the slot wall 34 facing away from the support structure 6. This strongly increases the friction between the rod 28 and the slot wall 34 therefore blocking an axial movement of the rod 28 and therefore fixing the position of the stator 3 with respect to the support structure 6.

Since the slot wall 34 and the face 35 of the rod 28 facing the support structure 6 both have a curved shape, especially the shape of a segment of a circle, and the rod 28 is spaced apart from the bottom 36 of the slot 27 the rod 28 can slightly rotate with respect to the slot 27 and therefore compensate angular tolerances. This reduces the stress and strain on the screw used for connecting the rod 28 to the support structure 6 and therefore avoids a bending of the screw. This can increase the time between failures of such a screw.

Although the present invention has been described in detail with reference to the preferred embodiment, the present invention is not limited by the disclosed examples from which the skilled person is able to derive other variations without departing from the scope of the invention.

## Claims

1. Electric machine, especially generator for a wind turbine (1), comprising a stator (3) that is attached to a stator support structure (6) by multiple connection means (7) arranged at the outer or inner circumference of the stator (3), **characterized in that** at least one of the connection means (7) is formed by a first and second clamping jaw (9, 10) and clamping means (11) that exert a force on the first and second clamping jaw (9, 10), pushing the first clamping jaw (9) against a first clamping face (12) of a protrusion (13) of the stator (3) and a first clamping face (14) of a protrusion (15) of the support structure (6) and pushing the second clamping jaw (10) against a second clamping face (16) of the protrusion (13) of the stator (3) and a second clamping face (17) of the protrusion (15) of the support structure (6), wherein the clamping jaws (9, 10) are arranged on opposite sides of the respective protrusion (13, 15).

2. Electric machine according to claim 1, **characterized in that** the first and second clamping jaws (9, 10) form a respective tapered groove (18), wherein the respective protrusion (13, 15) of the stator (3) and the support structure (6) engages the tapered groove (18) of the first and second clamping jaw (9, 10).

3. Electric machine according to claim 2, **characterized in that** the tapered groove (18) comprises a first surface section (19) that contacts one of the clamping faces (12, 16) of the protrusion (13) of the stator (3) and a second surface section (20) that is arranged at an acute angle to the first surface section (19) and that contacts one of the clamping faces (14, 17) of the protrusion (15) of the support structure (6).

4. Electric machine according to claim 2 or 3, **characterized in that** the tapered groove (18) has a trapezoidal shape.

5. Electric machine according to one of the preceding claims, **characterized in that** the protrusion (13) of the stator (3) comprises a first contact face (21) and that the protrusion (15) of the support structure (6) comprise a second contact face (22), wherein the first contact face (21) contacts the second contact face (22).

6. Electric machine according to claim 5, **characterized in that** the clamping faces (12, 16) of the protrusion (13) of the stator (3) are arranged at an acute angle to the first contact face (21) and/or that the clamping faces (14, 17) of the protrusion (15) of the support structure (6) are arranged at an acute angle to the second contact face (22).

7. Electric machine according to one of the preceding claims, **characterized in that** the clamping means (11) comprise a shaft (23), especially a screw, connecting the first clamping jaw (9) to the second clamping jaw (10) .

8. Electric machine according to claim 7, **characterized in that** the shaft (23) extends through a through hole (24) of the protrusion (15) of the support structure (6).

9. Electric machine according to one of the preceding claims, **characterized in that** the clamping jaws (9, 10) are formed as bars extending along the axial direction of the stator (3).

10. Electric machine according to one of the preceding claims, **characterized in that** the clamping jaws (9, 10) are arranged on opposite sides of the respective protrusion (13, 15) in circumferential direction of the stator (3) .

11. Electric machine, especially generator for a wind turbine (1), comprising a stator (1) that is attached to a stator support structure (6) by multiple connection means (7) arranged at the outer or inner circumference of a stator (3), wherein at least one of the connection means is formed by an axial slot (27), a rod (28) arranged in the slot (27) and a connecting element (29) connecting the rod (28) to the support structure (6), wherein the width of the rod (28) in the circumferential direction of the stator (3) is wider than the opening (30) of the slot (27), **characterized in that** a face (35) of the rod (27) facing the support structure (6) and/or a section of the slot wall (34) facing away from the support structure (6) is curved, especially in the shape of a segment of a circle.

12. Electric machine according to claim 11, **characterized in that** the support structure (6) and the rod (28) comprise multiple holes (32, 33) spaced along the axial direction of the stator (3), wherein a shaft (31), especially a screw, is engaging these holes (32, 33) as the connecting element (29) to attach the rod (27) to the support structure (6).

13. Electric machine according to claim 11 or 12, **characterized in that** the rod (28) is spaced apart from the bottom (36) of the slot (27).

14. Wind turbine, **characterized in that** it comprises an electric machine (2) according to one of the preceding claims.
